# EUROPEAN PATENT APPLICATION

(11) **EP 2 048 594 A1**
(43) Date of publication of application: **15.04.2009**
(21) Application number: 07019751.2
(22) Date of filing: 09.10.2007
(51) Int. Cl.: G06F 21/24

(54) **Method for communication, communication device and secure processor**

(71) Applicant: Vodafone Holding GmbH, 40213 Düsseldorf (DE)
(72) Inventor: Koraichi, Najib, 6333 CT Schimmert (NL); Hoeksel, Sebastiaan, 6229 VN Maastricht (NL); Montaner, Javier, 50008 Zaragoza (ES)
(74) Representative: Jostarndt, Hans-Dieter

(57) **Abstract**

The invention relates to a method for operating program modules (201, 202, 203, 301, 302, 303, 401, 402, 403), which are related to a mobile communication device.

According to invention the method is carried out in a way, which involves the following characteristics:
a. that a control unit (25, 26) is connected to a registry (15) which contains information about resources which are accessible by the program modules,
b. that at least one of the program modules (201, 202, 203, 301, 302, 303, 401, 402, 403, 801, 802, 803, 804) has access to a data file (501, 502, 503, 601, 602, 603, 701, 702, 703),
c. that the program module (201, 202, 203, 301, 302, 303, 401, 402, 403, 801, 802, 803, 804) evaluates, if a utilization of at least one resource is requested for carrying out at least one function of the program module,
d. that it is checked, if access rights are noted in the registry and
e. that an access of the program module to the resource is allowed, if the access right is noted the registry (25, 26).

The invention furthermore relates to a mobile communication device and a secure processor (10).

## Description

### Field of the invention

The invention relates to a method for operating program modules which are related to a mobile communication device.

The invention furthermore relates to a mobile communication device and a secure processor.

### Background of the invention

It is known, to use smart cards as pocket-size cards with an embedded integrated secure element which can process information. Smart cards can receive input which is processed by integrated secured elements applications. A result of this process or information generated from the processing of the input is delivered as an output.

Users which want to use different functions have to use several single cards, e.g. a banking card, or an access card.

It is furthermore known to send information to the smart cards or to receive information from the smart cards by near field communication technology.

The near field communication (NFC) technology standardized in ISO 18092 and 21481, ECMA 340, 352 and 356, and ETSI TS 102 190 allows contactless communication between devices over a short distance of about 10 to 20 centimetres. Near field devices or cards use a radio module comprising a NFC (near field communication) controller with a microprocessor and memory and a magnetic loop antenna operating at a frequency of 13.56 MHz. Important applications for NFC are electronic payment and electronic ticketing. Here, a NFC capable device comprises a secure element that communicates with the NFC controller and that is used as an electronic wallet or for storing electronic tickets. Payment or validation of an electronic ticket is made by simply touching the NFC capable device to a NFC reader or by putting the device in sufficiently close distance to the NFC reader. The close proximity between the NFC capable device and the NFC reader is required here to avoid reading out the wrong person or device.

### Summary of the invention

It is an object of the present invention to create a method which allows flexible usage resources in combination with a protection against fraud.

This object is achieved by a method according to claim 1, a communication device according to claim 2 and a secure processor according to claim 11. Embodiments of the method and the mobile communication device are subject of the dependent claims.

The invention includes a method for operating program modules, which are related to a mobile communication device!

The relation between the programme modules and the mobile communication device can be carried out in different ways. An example of this is, that the mobile communication device itself contains a control unit, which is capable of carrying out functions described in the current application.

Another alternative is, that a subscriber identity module (SIM), which occurred to be integrated in the mobile communication device contains the control unit.

However, it is also a possible, to split functions of the control unit between two different computing devices, for example between a computing device belonging to a fixed circuitry of the mobile communication device and another control unit integrated in the subscriber identity module.

According to the invention at least one of the program modules has access to a data file and/or another resource.

Examples of resources according to the invention are the above mentioned data files, transmission channels as for example RFID antenna capable of interacting with a reader/sender or another transmission channel for smart card functions, sender/receiver mobile communication functions as for example GSM, UMTS.

Furthermore according to the invention at least one program module has access to a data file. Access to a data file means in this context any ability to create, modify, rename or delete the data file.

It is useful, to define the category of the above rights, which are allowed to be used by the program module in the registry. For it is for example in some use cases preferred, to limit the usage right of the program module only to read allowance. In other cases one or more of the other allowances (rights) are useful to improve the functionality of the program module.

Furthermore the program module is capable of evaluating, if utilization of at least one resource is requested for carrying out at least one function of the program module.

Furthermore it is checked, if access rights are in the registry.

If the access right is registered in the registry, an access of the program module to the resource is allowed.

The allowance is preferably handled by the control unit or another unit with comparable administrative rights.

A further embodiment of the method, the communication device and the secure processor is characterized in, that the control unit checks, if the access rights are registered in the registry.

A further embodiment of the method, the communication device and the secure processor is characterized in, that the program module checks, if the access rights are registered in the registry.

A further embodiment of the method, the communication device and the secure processor is characterized in, that at least one secure domain contains one or more of the program modules.

A further embodiment of the method, the communication device and the secure processor is characterized in, that access right for program modules which belong to the secure data domain are defined by an issuer of a secure processor, which contains operating functions for carrying out the program modules.

A further embodiment of the method, the communication device and the secure processor is characterized in, that access right for program modules which belong to the secure data domain are defined by a trusted service manager an issuer of a secure processor, which contains operating functions for carrying out the program modules.

Preferably SPSD means Service Provider Security Domain. This is a secure domain (security domain) dedicated to a certain service provider, e.g. a bank or transport company.

MNO means a Mobile Network Operator. This is one possible issuer of a secure processor according the present invention.

The term OTA - Over the Air - refers to a remote management of a SIM, especially using GSM or UMTS as a bearer hence OTA.

UICC means Universal Integrated Circuit Card, according to ETSI SCP standards

DAP verification means Data Authentication Pattern verification. This allows a card issuer to certify a third party application. The DAP is provided to the application as a proof of this certification. On the UICC the DAP verification is a means to check that any application requesting to be installed on a SIM is certified by the card issuer. Of course the certification can be delegated.

Shared secret and label for PSK TLS means the indication of a Pre-shared key used for Transport Layer Security.

ADF; Application Dedicated File is the root file for applications on a UICC as defined in ETSI TS 102.221

SCWS is a Smart Card Web Server is a web server running on a smart card as defined by OMA. (Open Mobile Alliance).

ISD; Issuer Security Domain as defined by Global Platform, this domain can be seen as the administrator domain of a preferred smart card.

The TSD trusted security domain extends the Global Platform SPSD definitions with new parameters allowing quota management.

The TSD configuration has some features that in current GP definitions are only allowed by an ISD - issuer secure domain (SD), but still has the role of an SPSD as well. This allows use to have a single 3rd party managing other 4th parties onto smart cards according the invention.

A further embodiment of the method, the communication device and the secure processor is characterized in, that a control unit obtains information for a definition and/or activation of at least one secure data domain from an issuer

A further embodiment of the method, the communication device and the secure processor is characterized in, that the control unit checks if a registry contains information about resources for the definition and/or the activation of the secure data domain.

A further embodiment of the method, the communication device and the secure processor is characterized in, that in the case that resources for the definition and/or the activation of the secure data domain are available and allowance information of a card issuer has been received, the secure data domain is defined and/or activated.

The invention includes a method for communication between a secure processor, e.g. a subscriber identity module with a terminal interface whereby the terminal interface sends a request for a desired interaction with a program module.

The control unit receives a request for definition and/or activation of the secure data domain.

In one embodiment of the invention the secure processor contains at least two different program modules, and that the secure processor and/or a mobile communication device which is connected to the secure processor contains a control unit, wherein the control unit is capable of analysing the pattern.

A further embodiment of the method, the communication device and the secure processor is characterized in, that the request is handled according to the ISO 1443 Type A protocol.

According to one embodiment of the method, the mobile communication device and the secure processor according to the invention the request is handled according to the ISO 1444 Type B protocol.

According to one embodiment of the method, the mobile communication device and the secure processor according to the invention, a mobile communication device connectable to a control unit is characterized in,
- that the control unit is connected to a registry which contains information about resources which are accessible to program modules,
- that the program module is capable of evaluating, if a utilization of at least one resource is required for carrying out at least one function of the program module,
- that the control unit is capable of checking, if access rights are registered in the registry and
- that the control unit is capable of allowing an access of the program module to the resource, if the access right is registered the registry.

A further embodiment of the method, the communication device and the secure processor is characterized in, that the secure data domain is a subscriber identity module.

The invention includes different imported advantages.

One important advantage is a privacy protection. The invention enables different types of services which are normally associated to different cards and guarantees, that an operator of a terminal only gets information about the specific functionality which he needs to carry out a certain interaction.

An example of this is that a transport company only gets information, that a certain amount of a value is paid and no information about further payment opportunities or for card holder.

Similarly, a credit card company does not get any information about transport services or other services a holder of the mobile communication devices has used with other payment opportunities - for example an other credit card, a debit card or an electronic purse (ePurse).

In the case, that an ePurse is used, any information and any tracking of movements and activities such as purchases of goods from the card holder are protected from external access.

According to one embodiment of the method, the mobile communication device and the secure processor according to the invention, the secure processor is characterized in, that it contains a control unit, that is connected to a registry, which contains information about resources which are accessible to at least one program module; that the program module has access to a data file,
- that the program module is capable of evaluating, if a utilization of at least one resource is required for carrying out at least one function of the program module,
- that the control unit is capable of checking, if access rights are registered in the registry and
- that the control unit is capable of allowing an access of the program module to the resource, if the access right is registered the registry.

Though the invention is not limited to near field communication, a near field communication (NFC) is an advantageous embodiment for carrying out the invention.

Contactless communication, or near field communication (NFC), allows for the exchange of data between a NFC enabled reader and a NFC enabled card when they are placed in close proximity of each other.

A computing device, such as a smart card, a SIM card, a mobile handset or a combination of those devices, can be equipped with NFC communication technologies. The computing device may also contain software that emulates the application level behaviour of one or more NFC cards. Multiple card applications may reside on one NFC card.

When such a computing device is placed in front of a NFC reader, it will respond to the reader as if it is one NFC card. The computing device may emulate multiple NFC cards.

There exist many different types of NFC readers (e.g. a specific RF protocol may be supported); and a given NFC reader can only handle a subset of the available NFC cards.

The challenge for the computing device is to present those NFC cards and applications that are supported / expected by the NFC reader. This problem.is referred to as Application Selection.

Though the invention is especially advantageous for contactless communication, or near field communication (NFC) the exchange of data according to the invention can of course also be performed with contacts over greater distances - especially in the case, that suitable transmission lanes are established.

The unit, which exchanges information and requests for exchanging information, is according to the invention described as a terminal interface. The terminal interface is e.g. a reader, which can be integrated in various terminals. It is especially useful, to integrate the reader in different user terminals, e.g. cash machine, ticket automates, terminal for handling parking tickets or access control systems.

However, for those skilled in the art, it is evident, that other types of readers can be used.

In some situations the information that is received from the reader is not enough to uniquely identify the card application that should be selected. In these situations it is proposed that a subset of card applications is activated prior to a transaction according to the invention (performing a selection process) in such a way that one card application can uniquely be identified during the transaction from the subset of activated applications.

The creation of the subset of card applications could be done through a user selection menu. Conflict detection is however needed to signal to the user whether the currently selected subset is valid (i.e. it could be possible to uniquely select a card application at all times using the information from the NFC reader only).

The details of the conflict detection are provided in the NFC specifications.

The notion of activating a card application requires an extension to the lifecycle state diagram of a card application.

A card application is SELECTABLE & DEACTIVATED when it is not eligible for selection. Whereas a card application is SELECTABLE & ACTIVATED when it is eligible for selection by the NFC reader.

The selection of a card application that is in state SELECTABLE & ACTIVATED can be automated by applying pattern recognition on the initial information that is send from the NFC reader.

For this purpose every card application that is installed in the computing device has a pattern recognition parameter. The implementation details of the pattern recognition parameter are provided in the NFC specification document.

There may be many different types of application logic on the computing device that want to activate a card application. In order to guarantee that no inconsistencies arise it is proposed that state changes of card applications are handled centrally by one application; the central management application. The central management application implements the conflict detection logic described above.

In summary the following steps are advantageous:
- extension of state diagram with activated / deactivated states
- conflict detection to pre-select / activate applications
- all state changes are managed through a central logic
- pattern recognition to automatically detect a card application that should be selected

According to a first aspect of the invention, the functions of multiple cards - especially are RFID cards - are integrated in a single secure element, the secure element is for example a secure data domain as for example a subscriber identity module card.

Though the invention is not limited to applications, varying several functions are integrated in mobile communication device, it is especially useful to utilize the current invention for an integration of several functions in the mobile communication device.

Some embodiments of the invention related to such an integration of functions originating from an issuer and authorized and one ore more authorized other source - especially trusted service manager.

However, it is also possible, to utilize some embodiments of the invention for an improvement of a smart card, which allows a more efficient usage of the smart card irrespective of utilization of security domains.

It is especially useful implement security domains, which contain one or more program module. In this case it is especially preferred, that program modules within one security domain have only access rights to resources connected to the domain to which they belong.

This is especially useful for resources integrated within the secure domain, as for example data file.

However, it is also advantageous to connect certain resources to certain security domains, for example program modules with payment functionality or other functions which are limited or should be limited due to defined preferences of an issuer a service provider such as access to certain further usage functions, for example exchange possibilities to certain smart card functions such as access to card readers and/or for transmission function within a communication network as for example GSM or UMTS.

Other examples of secure data elements are: secure data domains as for example a secure memory card as it can for example be integrated into a mobile user equipment such as a mobile cellular phone, or a comparable device as a dictaphone.

According to one aspect of the invention the secure data domain is integrated into a secure processor, for example micro processor. The secure processor is for example integrated into the mobile user devices as for example a mobile phone, a mobile camera or a mobile dictaphone.

Functions of multiple cards (RFID) can be integrated in a single secure processor, for-example a (SIM) card, consisting of secure elements, which are afterwards called Secure Data domains (SD).

The invention allows to integrate functions of various different single cards into one card, for example functionality as a banking card, as a transport card, as an access control card or as an event ticket card.

It is furthermore possible, to even install conflicting applications on the same secure data domain SD.

Preferred embodiments of the invention may include a user interface and/or a user settings menu.

In a preferred embodiment the user interface is activated, when a conflict between different requirements for activating more than one program module are detected.

However, it is also advantageous to include a user settings menu which allows an entering of preferences of a user - especially before performing the communication between the terminal interface and the secure data domain.

Preferred elements for including in an user settings menu are:
- list of available applications,
- supports setting of preferences,
- activation / deactivation of applications,
- avoiding an activation of two or more active functions (referring to different program modules) at same time of the same type.
   If different program modules are capable of carrying out interaction with the terminal interface, it is advantageous to include methods for a conflict management.

The conflict management can be handled in different ways, for example it is possible to check, if preferences already exists or can be determined.

In one embodiment of the invention, the control unit contains a registry.

The registry is capable of performing several functions.

One of the functions which can be integrated in the registry is a conflict check between different applications.

For example the registry is capable of determining, if more than one program module is installed which is capable of performing one specific action.

An example of this is an existents of two different electronic purses.

In the case that two different purses or other functions related to one of the program modules could be activated, the registry could be used for finding out this coexistence and the possibility that a conflict could arise.

It is advantageous to inform a user of the mobile communication device via an electronic message about the potential conflict.

Solutions for solving the conflict - for example a definition of a priority of uses and blocking of other uses of similar applications which similar functionality can be blocked.

A selection for these options could be offered to the user of the communication device through a graphical user interface (GUI).

In this case the registry can have two functions: Support of determining if conflicts could arise and preventing conflicts by storing information about preferences for solving conflicts between applications with same or similar functionality.

For those skilled in the art, it is obvious that a combination of both functions is advantageous.

However those skills in the art could are aware that advantageous can be archived if at least one of these functions is used.

The invention includes different mobile communication devices which are capable of performing functions according to the invention.

According to one aspect of the invention a mobile communication device comprises a subscriber identity module (SIM) and NFC components for near field communication (NFC) including a radio module and a secure element for storing data used in near field communication services, the radio module communicating with the secure element. A control unit is connectable to the mobile communication device and to the subscriber identity module, the control unit and one of the mobile communication devices and the subscriber identity module forming a unit of the mobile communication device including at least one NFC component.

According to a second aspect of the invention, a control unit is provided for use in a mobile communication device, which comprises a subscriber identity module. The control unit is connectable to the mobile device (mobile terminal) and to the subscriber identity module and in that the control unit is configured in such a way, that the control unit and one of the mobile communication device and the subscriber identity module form a unit including at least one NFC component, which is selected from the set of NFC components comprising a radio module for near field communication and a secure element for storing data used in near field communication services.

The invention involves the idea to provide a control unit, which can be connected to the mobile communication device and the SIM to enable NFC functionality for a mobile communication device that comprises a mobile communication device and/or a SIM.

The components for enabling the mobile communications device to be used in NFC include a radio module and a secure element connected to the radio module. The radio module may comprise an antenna and a controller connected to the antenna.

In combination with the mobile communication device or with the SIM, the control unit forms a subassembly of the mobile communication device, which comprises at least one NFC component. If a NFC component is not included in this subassembly, the control unit allows for connecting this NFC component to the NFC component included in the subassembly.

The invention makes it possible to use NFC services by means of a mobile communication device and/or a SIM, which are not NFC enabled. Thus, the invention avoids that a mobile user has to replace both of his mobile communication device and his SIM for using NFC services.

Within the scope of the invention, the term subscriber identity module refers to a smart card, which can be inserted into a mobile device, and which contains the identity of a subscriber to mobile communication services.

For example the subscriber identity module may be configured as a SIM card according to the GSM standard (GSM: Global System for Mobile Communications) or as an USIM card according to the UMTS standard (USIM: Universal Subscriber Identity Module; UMTS: Universal Mobile Telecommunications System). The mobile device (mobile terminal) may comprise a radio interface for accessing a mobile communication network and a user interface, such as, for example, a display unit and/or input unit, which can be operated by the mobile user.

In one embodiment of the mobile communication device and the control unit, at least one NFC component is included in the subscriber identity module.

This NFC component may be the secure element, which may be embedded as an application into the secure processor. Since the secure processor constitutes a secured chip, it already provides the necessary functionality for secure storage of sensitive date used in near field communication services such as, for example, electronic payment or electronic ticketing. However, also the radio module or part of the radio module, particularly the controller, may be included in the subscriber identity module.

In another embodiment of the mobile communication device and the control unit, at least one NFC component is included in mobile communication device.

This NFC component may be the radio module, particularly the antenna of the radio module, since the antenna can be arranged in the mobile communication device in such a way that radio reception is essentially not affected by interferences due to electric currents in the mobile communication device or shielding.

A further embodiment of the mobile communication device and the control unit provides that at least one NFC component is included in the control unit.

In this embodiment a NFC component, which is neither included in the existing mobile communication device of the mobile user nor in his existing secure processor can be provided by the control unit to enable NFC functionality of the mobiles user's mobile communication device.

In one embodiment of the mobile communication device and the control unit, the radio module and the secure element communicate using a first communication protocol.

The first communication protocol may be the Single Wire Protocol (SWP), which might become the standard for the data transfer between the secure element embedded in a secure processor and a mobile communication device including a radio module for near field communication. Within the scope of the first protocol, it may be provided that the radio module and the secure element communicate via a predetermined electric contact element of the subscriber identity module, which may be the contact element C6 that is unused in mobile telecommunication standards.

In one embodiment of the mobile communication device and the control unit, the secure element is included in the secure processor and the radio module is included in the control unit.

This embodiment has the advantage that a mobile user who disposes of a NFC enabled secure processor including the secure element is able to use his existing mobile communication device that does not include a radio module. The radio module is provided by the control unit, which, in particular, is less expansive for the mobile user than a new NFC enabled mobile communication device.

As explained before, a NFC enabled secure processor may comprise a predetermined electric contact element dedicated to the communication between the secure element embedded in the secure processor and the radio module.

Therefore, a related embodiment of the mobile communication device and the control unit provides that the secure processor comprises a first electric contact element for connecting the secure element to the radio module, the first electric contact element being contacted by an electric contact element of the control unit.

In this embodiment, the control unit comprises an electric contact connected to the first electric contact element of the secure processor provided for connecting the secure element embedded in the secure processor to the radio module included in the mobile communication device. As explained before, the first contact element of the secure processor may be the contact element.

In addition, the control unit may connect further electric contact element of the secure processor to the mobile communication device, thereby allowing a communication between the secure processor and the mobile communication device via the control unit.

In another embodiment of the mobile communication device and the control unit, the radio module is included in the mobile communication device and the secure element is included in the subscriber identity module, the secure processor being adapted to communicate with the mobile communication device using a second communication protocol, and the control unit is adapted to convert data messages transmitted from the radio module to the secure element from the first to the second protocol and to convert data messages transmitted from the secure element to the radio module element from the second to the first protocol.

This embodiment has the advantage that a NFC enabled mobile communication device including the radio device can be used together with a secure element embedded into a secure processor that is not NFC enabled, which means that the secure processor does not support communication according to the first communication protocol or via the first electric contact element. Rather, the secure processor does support communication according to a second communication protocol, which may be the communication protocol provided in a mobile communication standard for the communication between the mobile communication device and the subscriber identity module.

Therefore, in this embodiment data messages sent from the radio module to the secure element are transmitted via the control unit, which converts the data messages from the first to the second communication protocol. Likewise, data messages sent from the secure element to the radio are transmitted via the control unit, which converts those data messages from the second to the first communication protocol.

This may involve forwarding data messages received from the mobile communication device via an electric contact element dedicated to the communication between the radio module and the secure element to an electric contact element of the secure processor dedicated to the conventional, i.e. not NFC related, communication between the secure processor and the mobile communication device.

Therefore, in a related embodiment of the mobile communication device and the control unit, the mobile communication device comprises a second electric contact element for connecting the radio module to the secure element, the second electric contact element is contacted by an electric contact element of the control unit, and the mobile communication device comprises at least one third electric contact element connected to a further electric contact element of the control unit, the third electric contact element being provided for communication between the secure processor and the mobile communication device.

Here, the fourth electric contact element of the mobile communication device may be a contact element provided for the conventional communication between the mobile communication device and the SIM, which is not related to NFC services.

A further related embodiment of the mobile communication device and the control unit provides that the control unit is adapted to forward a data message received from the radio module via the second electric contact element to the secure element via the third electric contact element of the secure processor and that the control unit is adapted to forward a data message received from the secure element via the third contact element to the radio module via the second contact element.

Moreover, in one embodiment of the mobile communication device and the control unit, the radio module is included in the mobile communication device and the secure element is included in the control unit.

This embodiment also makes it possible to use a NFC enabled mobile communication device comprising the radio module in combination with a subscriber identity module, which is not NFC enabled. As an alternative to the embodiments described before, this embodiment provides the solution that the secure element is embedded in the control unit.

Here, an electric contact element of the control unit may contact the third electric contact element of the mobile communication device for connecting the radio module to the secure element, thereby allowing communication between the radio module and the secure element using the first protocol. Furthermore, the fourth electric contact element of the mobile communication device may be connected to the second electric contact element of the SIM via the control unit.

In one embodiment of the mobile communication device and the control unit, the radio module and the secure element are included in the control unit.

This embodiment has the advantage that all components necessary for near field communication are included in the control unit. Thus, for enabling NFC functionality for an existing mobile communication device, which is not NFC capable, the mobile user only needs to add the control unit, which performs NFC functionality autonomously, i.e. essentially independent from the mobile communication device and the subscriber identity module. Here, the mobile communication device is particularly used as power supply and as housing for the control unit.

The aforementioned and other aspects of the invention will also be apparent from and elucidated with reference to the embodiments of the invention described hereinafter making reference to the drawings.

### Brief description of the drawings

Reference will be made by way of example to the accompanying drawings in which
- Fig. 1: is a schematic block diagram of a secure data domain according to one embodiment of the invention,
- Fig. 2: is a schematic depiction of one embodiment of the invention,
- Fig. 3: is a schematic block diagram of preferred element which are capable of influencing a control unit,
- Fig. 4: is a schematic block diagram of a mobile communication device according to the invention and
- Fig. 5: is a Life Cycle state diagram according to the invention.

### Detailed description of embodiments of the invention

The Invention can be integrated into different communication and handling standards.

In order to facilitate an integration of the invention in current card systems respectively in Card systems planed for integrating further functions, it is especially useful to use the invention in environments according to the global platform standard. The global platform standard is a standard for smart card infrastructure.

Those skilled in the art understand that the descriptions according to the global platform standard can be transferred to other standards for smart card infrastructure.

According to the global platform standard the following definitions are used for explaining the afterwards described preferred embodiments of the invention:
APDU (Application Protocol Data Units)
   Standard communication messaging protocol between a card acceptance device and a smart card.
API (Application Programming Interface)
A standardized set of methods for a programmer to take advantage of (i.e. interface with) the capabilities of the card or device. The API is essentially a set of tools or services commonly used by applications on a card or device.
Application Provider
   Entity that owns an application and is responsible for the application's behaviour.
Business Logic
   Business Logic Layer exercises the highest level of control over the operations of the terminal. The Business Logic Layer is principally responsible for selecting an appropriate application to activate, both in the card and in the terminal. The Business Logic Layer is also responsible for implementing local policies. Split tender purchases, for example, may be an accepted practice in some places, but not allowed in others.
Card Manager
   An on-card agent within the GlobalPlatform card which enables the Issuer to maintain and exercise control over the card. This agent controls which applications can be loaded onto the card after it has been issued.
Chip Logic Component
   The Chip Logic Component (CLC) Layer contains all the environment-independent code. The CLC Layer includes a module for each application the terminal supports. It is in the CLC Layer where the device component of each application resides.
Common Criteria
   A public shared security standard, on which card industry leaders are cooperating. This will be the standard to which most smart cards will be tested in the future.
EEPROM (Electronically Erasable Programmable Read-Only Memory)
   Memory that can be erased and reused, but does not require electrical power to maintain data. It is used primarily to store information that will change, such as transaction counters.
EMV
   Technical Specifications developed jointly by Europay, MasterCard International, and Visa to create standards and ensure global interoperability for use of Chip technology in the payment industry.
Environment Services
   These services provide a consistent interface to a set of resources commonly found on many chip-card terminals.
ISO 7816
   The ISO (International Standards Organization) standard which governs contact based integrated circuit cards.
ITSEC
   A regional security evaluation scheme. Based on assurance levels against private targets. Will be superseded by Common Criteria.
Java Card®
   The smart card runtime environment developed by Sun. Based on Java.
GlobalPlatform
   The industry standard for managing a smart card based single and multiple application program. Includes card specifications, device specifications, and systems specifications.
GlobalPlafform API
   Through the services contained in the GlobalPlatform API, all applications can be created and accessed in a uniform way.
Post-Issuance Loading
   The loading of applications to a card after the process of personalization and card issuance has taken place.
Runtime Environment
   The Runtime Environment consists of three basic components. These are the Card Operating System, the Virtual Machine and the Application Programming Interface (API)
Security Domain
   Security Domains can be established on the card to protect application providers or groups of applications. Security Domains enable the applications of various providers to share space on a card without compromising the security of any particular provider or application.
Virtual Machine
   A Virtual Machine acts as a translator, converting instructions of the application into unique commands understood by a specific type of card. A Virtual Machine enables application portability.
Windows® for Smart Cards
   The smart card runtime environment developed by Microsoft. Based on common Windows/Visual Basic tools and principles.

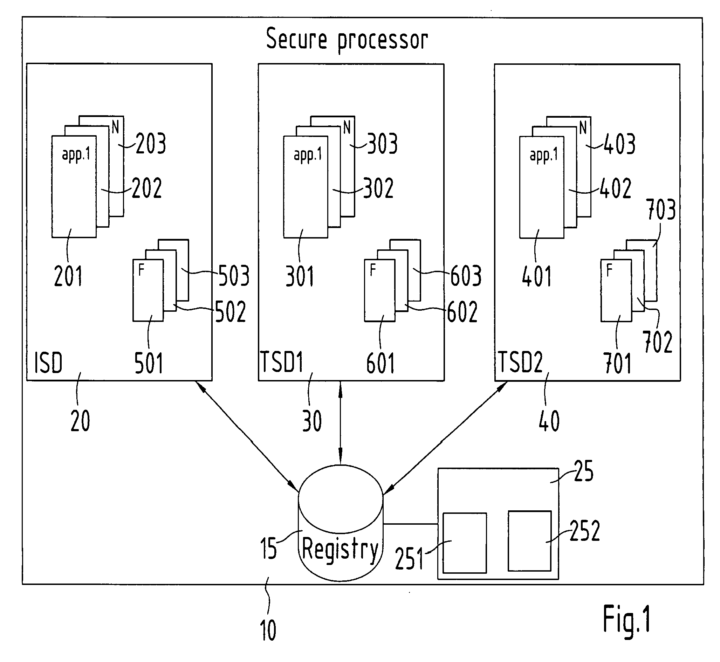

Fig. 1 shows a schematic depiction of a secure processor 10 according to the invention.

The secure processor contains a registry 20, which is connected to an issuer security domain ISD 20 and one or more third party security domains 30, 40.

The registry 20 contains information about resources and/or activation conditions for the domains 20, 30 and 40.

The registry 20 contains information about the security domains 20, 30 and 40 and the program modules 201, 202, 203, 301, 302, 303, 401, 402, 403 included in the security domains 20, 30 and 40.

With the described secure processor it is possible to carry out methods for communication between the secure processor 10 and a terminal interface 5) whereby the terminal interface 5 sends a request for a desired interaction with a programme module 201, 202, 203, 301, 302, 303, 401, 402, 403.

The terminal interface 5 or a digital processing unit connected to the terminal interface 5 integrates a pattern into the request for the desired interaction, wherein the pattern includes information about a class of interactions to which the desired interaction belongs.

The secure processor 10 contains at least two different program modules, and that the secure processor 10 and/or a mobile communication device which is connected to the secure processor 10 contains a control unit 25, 26, wherein the control unit 25, 26 is capable of analysing the pattern.

The control unit 25, 26 determines the class of interactions, to which the request belongs.

Furthermore the control unit 25, 26 makes a selection of a selectable program module, wherein the selection is influenced by the class of interactions to which the desired interaction belongs.

Preferably the registry 15 contains some, most or even all of the following information:
- preferences of a user,
- preferences of the installer of the terminal,
- properties of program modules 201, 202, 203, 301, 302, 303, 401, 402, 403, 801, 802, 803 and 804,
- storage capacity of data files 501, 502, 503, 601, 602, 603, 701, 702 and 703,
- information about resources of a secure data domain (20, 30, 40),
- information about a definition of the secure data domain (20, 30, 40) and
- information about an activation of the secure data domain (20, 30, 40).

It is possible, to carry out the invention with different type of secure processors. A preferred embodiment of such a secure processor is a subscriber identity module SIM or a processor of a smart card. These processors are modified according to the invention in order to achieve one or more of the advantages described in the current application text.

In one embodiment of the invention the secure processor is integrated in a contactless smart card, in which the chip communicates with the card reader through RFID induction technology (at data rates of 106 to 848 kbit/s). These cards require only close proximity to an antenna to complete transaction. They are often used when transactions must be processed quickly or hands-free, such as on mass transit systems, where smart cards can be used without even removing them from a wallet.

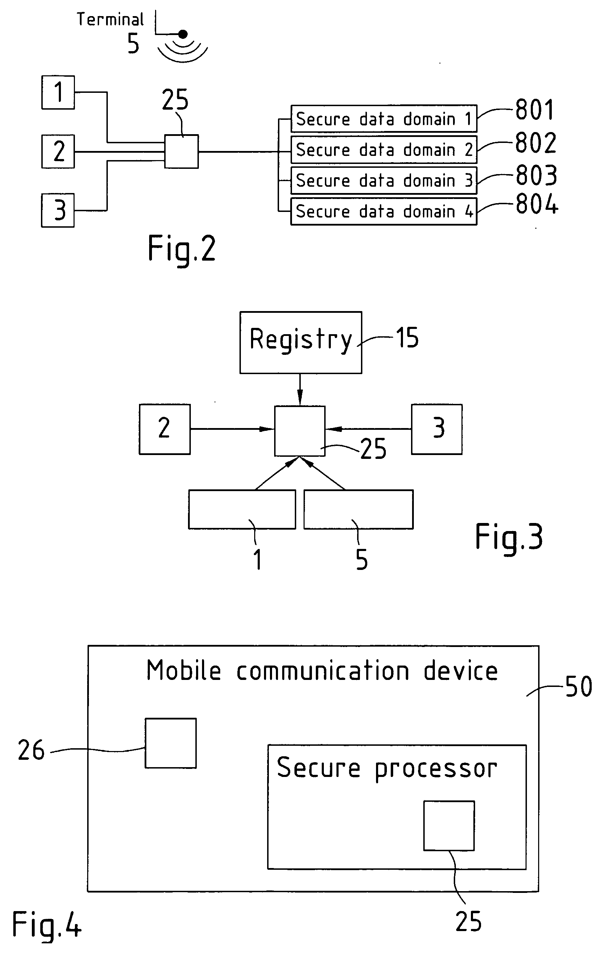

An example of contactless smart card communications is depicted in figure 2.

The embodiment according to figure 2 contains an antenna of a terminal interface 5.

The terminal interface 5 is capable of communicating with the control unit 25.

One standard for contactless smart card communications is ISO/IEC 14443, dated 2001. It defines two types of contactless cards ("A" and "B"), allows for communications at distances up to 10 cm. There had been proposals for ISO 14443 types C, D, E and F that have been rejected by the International Organization for Standardization. An alternative standard for contactless smart cards is ISO 15693, which allows communications at distances up to 50 cm.

ISO 14443 defines a proximity card used for identification that usually uses the standard credit card form factor defined by ISO 7810 ID-1. Other form factors also are possible. The Radio Frequency Identification (RFID) reader uses an embedded microcontroller (including its own microprocessor and several types of memory) and a magnetic loop antenna that operates at 13.56 MHz (RFID frequency). More recent ICAO standards for machine-readable travel documents specify a cryptographically-signed file format and authentication protocol for storing biometric features (photos of the face, fingerprints, and/or iris).

ISO 14443 consists of four parts and describes two types of cards: type A and type B. The main differences between these types concern modulation methods, coding schemes (part 2) and protocol initialization procedures (part 3). Both type A and type B cards use the same high-level protocol (so called T=CL) described in part 4. The T=CL protocol specifies data block exchange and related mechanisms.

ISO 14443 uses following terms for components:
* PCD - proximity coupling device (or reader)
* PICC - proximity integrated circuit card

The Calypso (RFID) standard complies with ISO14443 part 1, 2, 3 and 4 type B. MIFARE cards comply with ISO14443 part 1, 2 and 3 type A.
E-passports comply with ISO 14443.

Some RFID credit cards use ISO 14443 type B

The current invention can be carried out independently from a certain standard. However to facilitate an integration of method and characteristics according to the invention, it is possible to use improvements of known standards as e.g.:
ISO 14443 Division:
ISO 14443-2 Physical Layer
ISO 14443-3 Initialization and Anti-collision
ISO 14443-4 Block Transmission Protocol

Contactless protocol standards

### Common Behaviour

Contactless Reader/validator

When switched-on, the contactless reader - terminal 5 - generates a Radio Frequency (RF) field.

The terminal 5 starts polling for a contactless device by sending requests (REQA, REQB,..) periodically.

If a correct answer is received, it executes an anti-collision loop in order to detect all devices in the field. Then it selects one of them and starts data communication.

### Contacless cards

The power is provided by the RF field

An RF antenna is connected to the card to retrieve this power.

### Contactless mobile phones

Specifications o the NFC Forum to address use cases related to a contactless mobile phone environment

Antenna in on the mobile connected to a NFC chip, this NFC chip forwards contactless data to the SIM card.

ISO 1443 Type A/B protocol description

### Contacless Data Communication

Once the initialization and anti-collision phases are over, the data communication begins.

RF Reader sends the first command (generally an APDU)

The APDU protocol is similar to the one of T=1 protocol
- Data is always included in response,
- no GetResponse

The protocol is Half Duplex, the RF does not reader send the next APDU before the card answers the previous one.

When the transaction is over, the RF reader sends a Halt or Deselect Command.

All communication stops
The card then waits for a Wake-Up signal or a field exit.

ISO 15693 is an ISO standard for "Vicinity Cards", i.e. cards which can be read from a greater distance as compared to Proximity cards.
ISO 15693 systems operate at the 13.56 MHz frequency, and offer maximum read distance of 1-1.5 metres.
As the vicinity cards have to operate at a greater distance, the necessary magnetic field is less (0.15 to 5 A/m) than that for a proximity card (1.5 to 7.5 A/m).

The control unit 25 is capable of activating and/or deactivating secure data domains 801, 802, 803 and 804 independently from each other.

The representation of secure data domains in Fig. 1 and Fig. 2 is of course only schematic. According to a preferred embodiment of the invention the control unit 25 is capable of reserving resources for secure data domains. Therefore the control unit 25 is capable of determining a number of secure data domains which exists or could exist within a processor environment.

The invention allows allocating resources to different secure domains, which can operate independently from each other.

Preferably each security domain 20, 30 and 40 contains program modules 201, 202, 203, 301, 302, 303, 401, 402, 403 and data files 501, 502, 503, 601, 602, 603, 701, 702 and 703.

Information about properties of the secure domains 20, 30 and 40 are stored in the registry 15.

It is especially advantageous, if the registry 15 furthermore information about properties of the program modules 201, 202, 203, 301, 302, 303, 401, 402, 403 and the data files 501, 502, 503, 601, 602, 603, 701, 702 and 703.

In a preferred embodiment of the invention the secure processor 10 is enabled to define and/or activate a secure domain 20 with properties which are different from the other secure domains 30 and 40.

For example an issuer security domain 20 cam have higher protection against changes of parameters or it is possible to define that certain requirements, especially minimum requirements of resources of the issuer secure domain ISD 20 have to be maintained.

Preferably the control unit 25 operates allocations of resources in a way that these requirements are fulfilled.

In an even more preferred embodiment of the invention, the control unit 25 contains a remote file manager RFM 251 and/or a remote application manager RAM 252.

In one embodiment of the invention the registry 15 gets additional records that store files and/or applications stored or removed in relation to trusted security domains TSD 30 and 40.

Memory quota for a trusted secure domain 30 can be transferred one or more of the other trusted secure domains TSD 40.

Advantageous implementations of the invention related to the support of multiple security domains.

Examples of further parameters of the secure domain are creation and deletion of files in file trees for the secure domains.

Installation and deletion of applications by the TSD can even occur if these applications are allocated to an associated SPSD.

In addition to the ISD the UICC could support TSDs and SPSDs.

In one embodiment of the invention only the ISD and TSDs could be provisioned with OTA keys and thus only the MNO and the TSMs are able to manage card applications. The loading and installation process on the UICC itself can also happen in any associated SD.

SPSDs enable confidential application loading and confidential personalisation, i.e. loading and personalisation processes that use the MNO's or TSM's OTA infrastructure, but where the data is kept confidential to the SP.

The keys provisioned in TSDs or SPSDs could never be given to the MNO, but kept securely by the card manufacturer. Upon request of the MNO, the relevant keys could be given directly to TSMs or SPs.

For security reasons, all SDs could be pre-loaded during card production. The UICC could support at least 5 TSDs plus 5 SPSDs. Unless defined otherwise in the card profile, TSDs and SPSDs could initially be associated to the ISD. The UICC could forbid the installation of additional SDs from executable load files that were loaded after production.

The UICC could support SDs with Authorised or Delegated Management privileges. However, even if an SPSD has these privileges, it still needs the support of the ISD or a TSD for the OTA access to the UICC. Note that the SPSD could be prohibited from using other secure channels than the OTA channel to run GlobalPlafform commands.

The MNO could have two options for defining privileges in the card's profile or for setting them when activating a SD:
- Authorised Management according to Global Platform 2.2, which does not require tokens: the TSM or SP can manage applications without signatures from the MNO.
- Delegated Management with tokens generated by the MNO according to Global Platform 2.1.1. The TSM or SP can only manage applications for which the MNO has provided a token.

The ISD could have the Token Verification privilege.

The UICC could support SPSDs for confidential application loading and confidential personalisation as defined in. These SDs could have Authorised or Delegated Management privileges and could be associated to the ISD or a TSD that must secure the OTA link (the latter are called Link Platform Operator's SD.

On cards delivered to the MNO after production, TSDs and SPSDs could be either in SELECTABLE or in PERSONALIZED state according to Global Platform 2.1.1. In both cases, each SD could be provisioned with its Key-set.

The following information could either be provisioned with preliminary (SELECTABLE state) or final (PERSONALIZED state) data:
- Privileges; a 3-byte bitmap, as defined in Global Platform 2.2
- SD Properties; proprietary configurable properties of an SD, including settings for the security policy (e.g. if DAP verification or confidential loading is required)
- Memory Quota; for TSDs only; a proprietary restriction on how much memory can be consumed by the SD. This value may be zero after card production

If a card is delivered with an SD in SELECTABLE state, this preliminary information may be updated via OTA by the owner of the associated SD (ISD or TSD in case of an SPSD) before setting the SD to PERSONALIZED state. Once the SD is in PERSONALIZED state, the Privileges and SD Properties could not be updatable anymore.

The SD Properties could be handled as a parameter for the Install [for install] of the SD, coded as follows:

| **Tag** | **Length** | **Value/Meaning** |
|---|---|---|
| 'EF' | variable | System specific parameters |
| ... | | Other system specific parameters |
| 'FE' | variable | Proprietary information |
| '80' | 1 | SD properties |

The value part of the SD Properties is defined as follows:

| **b8** | **b7** | **b6** | **b5** | **b4** | **b3** | **b2** | **b1** | **Meaning** |
|---|---|---|---|---|---|---|---|---|
| - | - | - | - | - | - | - | 0 | Cumulative content deletion not supported |
| - | - | - | - | - | - | - | 1 | Cumulative content deletion enabled |
| - | - | - | - | - | - | 0 | - | DAP verification not required |
| - | - | - | - | - | - | 1 | - | DAP verification required |
| - | - | - | - | - | 0 | - | - | Confidential loading not required |
| - | - | - | - | - | 1 | - | - | Confidential loading required |
| - | - | - | - | 0 | - | - | - | Normal use of OTA keys |
| - | - | - | - | 1 | - | - | - | Use of OTA keys forbidden |
| x | x | x | x | - | - | - | - | RFU (could be set to 0 and be ignored by the UICC) |

The following rules could apply:
- Cumulative content deletion enabled' could only be set for TSDs.
- DAP verification required', 'confidential loading required' and 'Use of OTA keys forbidden' could only be set for SPSDs. If the related keys are personalised in an SD, DAP verification or confidential loading are supported in general.
- Additional bytes in the SD properties TLV could be ignored.
- If the SD Properties are not present, this could be interpreted as all settings being zero.

The SD Properties could be updatable according to the rules defined above.

The ISD could be personalised with Global Delete, Global Lock and Global Registry privileges. This is required to allow the ISD to enable TSDs and SPSDs once the UICC is in the field.

Extradition of a TSD to itself could be supported. This is required by some cards for proper usage of OTA keys. However, there is no requirement to link the usage of OTA keys to this mechanism

The TSM could use its OTA and GlobalPlatform 2.1.1 mechanisms to load and install executable load files and applications into its TSD. These mechanisms can also be used by the TSD to receive files and applications via OTA and subsequently pass them to an SPSD (associated with the TSD), for loading and installation. The following additional processes could be implemented:
- Before loading or installing to either its own TSD or an associated SPSD, the TSD could ensure that it has sufficient remaining quota to perform the load.
- If required by the SP, the SPSD could perform confidential application loading. Tag 'D4' is used to indicate that the load file contains confidential data, as defined in. The SPSD could decrypt the load file using its own confidentiality key and apply its own security policy (e.g. DAP verification) before loading the file.

The TSM can use its own OTA and GlobalPlatform mechanisms to personalize applications within its own TSD, and to personalize applications with confidential data in any SPSD that is associated with its TSD. The following additional processes could be supported:
- If data loading will consume additional memory on the card, then the TSD could first ensure that it has sufficient remaining quota to perform the load.
- If required by the SP, the SPSD could enable confidential personalisation using the SCP02 method. At least the implementation option i = '55' for SCP02 could be supported.

The following key identifiers/key versions can be used for the keys contained in the SDs:
- OTA keys:

- For DAP verification: Key identifier '02' and Key Version number'11'.
- For confidential loading: Key identifier'01' and Key Version number '12'.
- For confidential personalisation with SCP02 and i = '55': Key identifier'01', '02' and '03' and Key Version number'13' could be used for the S-ENC, S-MAC and DEK key.
- For setting up PSK TLS for SCWS Administration with the full administration protocol:
   - 16 byte random shared secret: Key Version number'14', key identifier '01', key type '70';
   - 16 byte label associated with the secret: Key Version number'14', key identifier '02', and key type '71'. If the label is shorter than 16 bytes, it could be zero ('00') padded.

The following table identifies, which keys can be personalised in which SD:

| | **ISD** | **TSD** | **SPSD** |
|---|---|---|---|
| OTA keys | yes | yes | no |
| DAP verification | no | no | yes, if used |
| confidential loading key | no | no | yes, if used |
| confidential personalisation keys | no | no | yes, if used |
| shared secret and label for PSK TLS | yes | yes, if used | no |

The following rules can apply for application and SD deletion:
- Deletion of applications and SDs could be implemented on the UICC. Only the ISD may have the Global Delete Privileges.
- If an SD is deleted, the released memory could be fully reusable and can be e.g. given to any other SD on the card by the ISD.
- The UICC could support cumulative content deletion and memory quota management can be used

If cumulative content deletion is enabled in the SD Properties of a TSD, the UICC could support the following command sent to the ISD.

DELETE with CLA-INS-P1-P2 set to '80 E4 00 80' and the data field containing the following TLV structure:

| **Tag** | **Length** | **Value/Meaning** |
|---|---|---|
| 'FE' | variable | proprietary information |
| '4F' | 5-16 | AID of TSD |
| '80' | 1 | Mode: |
| | | '01' = cumulative content deletion |

Upon reception of this command, the following content associated with the TSD or any of its associated SPSDs could be deleted:
- All applications
- RFM applications
- ADFs
- Static SCWS content
- The SCWS administrative agent including all URLs it owns

Finally, the card could set the memory quota of the TSD to zero. The keys of the TSD and any associated SPSDs can not be deleted.

Memory quota as used in this specification refers to a reserved memory space that may not be exceeded. Note that this definition of 'quota' deviates from the definition in the standard, where 'quota' refers to a non-guaranteed upper limit.

The following actions could be charged against the memory quota of the SD:
- Installation and deletion of applications by the TSD, even if these applications are allocated to an associated SPSD
- Personalisation data for these applications
- Memory allocated to these applications during runtime
- Installation of ADFs in the TSD
- Creation and deletion of files in the ADF file trees
- Upload and removal of static content by an associated administrative agent of the SCWS

Memory quota could be handled as a parameter for the Install of the TSD, coded as follows:

| **Tag** | **Length** | **Value/Meaning** |
|---|---|---|
| 'EF' | Variable | System Specific Parameters |
| ... | | other system specific parameters |
| 'FE' | Variable | Proprietary Information |
| '81' | Variable | Memory quota |

The value part of Memory quota could contain the memory quota in bytes, encoded as binary unsigned integer, without leading zero bytes.

The UICC could support the modifying of a memory quota for a TSD. This can only be done from the ISD. The quota can be changed any time during the lifetime of the card.

The Memory Quota could be updatable using Install [for registry update].

The following rules regarding the registry update command setting a memory quota could apply:
- If the amount of memory indicated in the command is not available on the card, the install command could fail with the status word set to '6A84' (Not enough memory space).
- Else if more memory than the amount indicated in the command is already used, the command could fail with the status word set to '6985' (Conditions of use not satisfied). In this case, the MNO can notify the TSM and ask him to reduce the amount of used memory before trying to reduce the quota again.
- If the indicated amount of memory is available on the card and is greater than the value currently used, the new value could be set successfully.
   The UICC can support the GlobalPlatform GET DATA command to retrieve a TSD's memory quota and the amount of used memory. GET DATA could be usable either from the TSD directly or from the ISD if it is preceded by an INSTALL [for personalisation] of the target TSD.

GET DATA could be extended to support tag 'EF'. The response data could encapsulate 2 TLVs with the following tags in a TLV with tag 'EF':
- 81' for the memory quota
- 82' for the amount of used memory
   The UICC could reject attempts to update these values with the STORE DATA command.
   The UICC could support the installation of additional RFM applications. This may already happen during card production. A detailed description of this functionality is available in.

### Application selection and activation

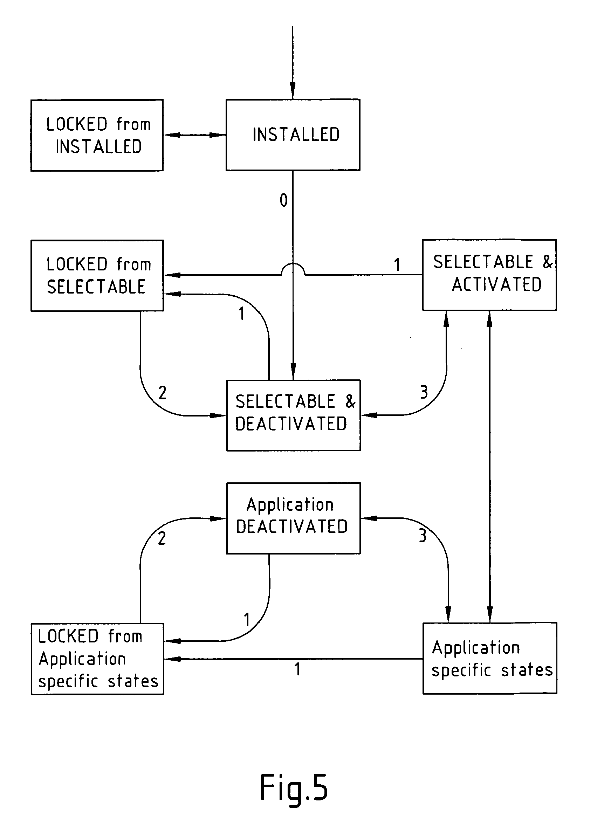

The UICC can support the GlobalPlafform Application Life Cycle state diagram as depicted in Figure 5.
- The change to the SELECTABLE&ACTIVATED state could only be possible using the API. The GlobalPlatform SET STATUS command could return an error code when used to update the state to SELECTABLE&ACTIVATED.
- After installation or unlock, the application could preferably go to a DEACTIVATED state.
- An application could only have access to the NFC functionality when it is in SELECTABLE&ACTIVATED state.

The Global Platform Application Life Cycle Coding is extended as follows:

| **B8** | **b7** | **b6** | **B5** | **B4** | **B3** | **b2** | **b1** | **Meaning** |
|---|---|---|---|---|---|---|---|---|
| 0 | 0 | 0 | 0 | 0 | 0 | 1 | 1 | INSTALLED |
| - | - | - | - | - | - | - | 0 | Application DEACTIVATED |
| 0 | 0 | 0 | 0 | 0 | 1 | 1 | 1 | SELECTABLE and ACTIVATED |
| 0 | X | X | X | X | 1 | 1 | - | RFU (Application Specific State) |
| 1 | - | - | - | - | - | 1 | 1 | LOCKED |

A new Java Card API could be supported to manage the GlobalPlatform state of the installed NFC applications. This API could only be accessible from one single application.

The CAM API allows the activation and deactivation of a NFC application (i.e. change of state to SELECTABLE & ACTIVATED or SELECTABLE & DEACTIVATED) and also provides the list of NFC applications stored in the UICC.

A RF protocol is defined by a set of RF protocol parameters and is associated with one HCI RF gate. For each NFC application the UICC's GlobalPlatform Registry could be extended and store the values of the RF protocol parameters. Multiple sets of protocol parameters could be stored when several RF protocols are supported by the same NFC application.

Sources for information about preferences for the selection are depicted in Fig. 3.

The information about preferences is for example included in the request for a desired action which is sent from the terminal interface.

According to another embodiment of the invention the information about preferences is included in the subscriber identity module.

It is of course possible, that information about the preferences is contained in more than one source of information. This includes, that information about preferences can be included as well in the request as in the subscriber identity module.

Especially in the case that no preferences are received from any of the sources of preferences (request or secure processor or mobile user equipment) or in the case that conflicting preferences exist, it is advantageous that a user interface is activated, wherein the user interface enables a selection of the programme module by a user of the mobile terminal (mobile terminal). This allows an interaction by a user.

Fig. 4 is a schematic block diagram of a mobile communication device according to the invention.

This mobile communication device could contain one control unit 25 and an additional control unit 26.

It is possible to split control unit functions between the first control unit 25 and the second control unit 26.

This separation of control functionality allows the different control units to make use of each others properties. For example a UICC - Universal Integrated Circuit Card, especially according to ETSI SCP standards - is a secure processor, provisioned in a secure production facility. This secure processor can be produced as a removable device.

The other control unit is a fixed device, especially not yet provisioned with a key for cryptographic functions as authentication/encryption/decryption.

The UICC could provision a communication device with some delegated keys to allow the communication device to perform such operations as a SIM does. For example the communication device can be paired with a SIM and even if the SIM is not present in the communication device some functionality may still be available to a user of the communication device.

Figure 4 shows a block diagram of a mobile communication device according to the invention, such as, for example, a cellular phone or a personal data assistant (PDA). The mobile communication device comprises a main processor for controlling the operation of the mobile communication device.

A memory unit is coupled to a main processor for storing data and applications that can be run on the processor. Furthermore, a radio antenna is provided in the mobile communication device for connecting the mobile communication device to a communication network, such as, for example Bluetooth, near field communication (NFC), a GSM network or an UMTS network.

Moreover, the mobile communication device comprises a display unit and an input unit, which can be operated by the user of the mobile communication device. The input unit for user interaction may be configured as a keypad.

Through a card reader unit, the mobile communication device can be connected to a secure processor, for example a subscriber identity module (SIM) 10 to form a mobile communication device. The secure processor 10 may be configured as a SIM according to the GSM standard or a USIM according to the UMTS standard. The SIM 10 is a smart card comprising a microprocessor and one or more memory units. It stores preconfigured user-related and network-related data, particularly data identifying the mobile user and data for authenticating the user or his mobile communication device to a mobile communication network. Furthermore, the SIM 10 may be able to store data of the user during operation, such as for example, a phone book or messages received or sent with the mobile communication device. For securely storing the data, the SIM 10 contains one or more applications for storing the data using cryptographic algorithms. Further applications such as, for example, the SIM 10 application Toolkit (STK), enable the SIM 10 to access functions of the mobile communication device.

For the communication between a radio module in the mobile communication device, a dedicated communication mechanism may be provided. One solution is the Single Wire Protocol (SWP), which is being standardized by the European Telecommunications Standards Institute (ETSI).

The SWP allows a bidirectional communication using a single terminal. This terminal may be a contact element C6, which is unused within the scope of the ISO protocols and the mobile communication standards. Therefore, in order to enable NFC functionality in a mobile communication device, a SIM 10, which is used in connection with a mobile terminal comprising a radio module, must particularly support communication with the mobile communication device according to the SWP using the contact element C6.

A SIM 10, which does support such a communication is referred to a as NFC enabled SIM 10 hereinafter, while a mobile terminal 100 comprising a radio module for near field communication is referred to as NFC enabled mobile communication device 50 hereinafter.

### List of references

- 1.: Data input from issuer
- 2.: Data input from trusted service manager
- 3.: Data input from trusted service manager
- 5.: Terminal
- 10.: Secure processor
- 15.: Registry
- 20.: Issuer security domain
- 25.: Control unit
- 26.: Control unit
- 30.: TSD - TSM Security Domain
- 40.: TSD - TSM Security Domain
- 50.: Mobile communication device
- 201.: Programme module
- 202.: Programme module
- 203.: Secure data domain
- 251.: RFM Remote file manager
- 252.: Remote application manager
- 301.: Programme module
- 302.: Programme module
- 303.: Programme module (secure data domain)
- 401.: Programme module (secure data domain)
- 402.: Programme module (secure data domain)
- 403.: Programme module (secure data domain)
- 501.: Data file
- 502.: Data file
- 503.: Data file
- 601.: Data file
- 602.: Data file
- 603.: Data file
- 701.: Data file
- 702.: Data file
- 703.: Data file
- 801.: Programme module (secure data domain)
- 802.: Programme module (secure data domain)
- 803.: Programme module (secure data domain)
- 804.: Programme module (secure data domain)

## Claims

1. Method for operating program modules (201, 202, 203, 301, 302, 303, 401, 402, 403, 801, 802, 803, 804), which are related to a mobile communication device,
**characterized in,**
- **that** a control unit (25, 26) is connected to a registry (15) which contains information about resources which are accessible by the program modules,
- **that** at least one of the program modules (201, 202, 203, 301, 302, 303, 401, 402, 403, 801, 802, 803, 804) has access to a data file (501, 502, 503,601,602,603,701,702,703),
- **that** the program module (201, 202, 203, 301, 302, 303, 401, 402, 403, 801, 802, 803, 804) evaluates, if a utilization of at least one resource is requested for carrying out at least one function of the program module,
- **that** it is checked, if access rights are registered in the registry (25, 26) and
- **that** an access of the program module to the resource is allowed, if the access right is registered the registry (25, 26).

2. The method according to claim 1,
**characterized in,**
**that** the control unit (25, 26) checks, if the access rights are registered in the registry (25, 26).

3. The method according to any of the preceding claims,
**characterized in,**
**that** the program module (201, 202, 203, 301, 302, 303, 401, 402, 403, 801, 802, 803, 804) checks, if the access rights are registered in the registry (25, 26).

4. The method according to any of the preceding claims,
**characterized in,**
**that** at least one secure domain (20, 30, 40) contains one or more of the program modules (201, 202, 203, 301, 302, 303, 401, 402, 403, 801, 802, 803, 804).

5. The method according to claim 4 **characterized in, that** access right for program modules (25, 26) which belong to the secure data domain (20, 30, 40) are defined by an issuer of a secure processor, which contains operating functions for carrying out the program modules (201, 202, 203, 301, 302, 303, 401, 402, 403, 801, 802, 803, 804).

6. The method according to any of the claims 4 or 5, **characterized in, that** access right for program modules (25, 26) which belong to the secure data domain (30, 40) are defined by a trusted service manager an issuer of a secure processor, which contains operating functions for carrying out the program modules (201, 202, 203, 301, 302, 303, 401, 402, 403, 801, 802, 803, 804).

7. The method according to any of the claims 4 to 6,
**characterized in,**
**that** a control unit (25, 26) obtains information for a definition and/or activation of at least one secure data domain (20, 30, 40) from an issuer

8. The method according to any of the claims 4 to 7,
**characterized in,**
**that** the control unit (25, 26) checks, if a registry (15) contains information about resources for the definition and/or the activation of the secure data domain (20, 30, 40).

9. The method according to any of the claims 4 to 8
**characterized in,**
**that** in the case that resources for the definition and/or the activation of the secure data domain (20, 30, 40) are available and allowance information of a card issuer has been received, the secure data domain (20, 30, 40) is defined and/or activated.

10. A mobile communication device connectable to a control unit (25, 26),
**characterized in,**
- **that** the control unit (25, 26) is connected to a registry (15) which contains information about resources which are accessible to program modules (201, 202, 203, 301, 302, 303, 401, 402, 403, 801, 802, 803, 804);
- **that** the program module (201, 202, 203, 301, 302, 303, 401, 402, 403, 801, 802, 803, 804) is capable of evaluating, if a utilization of at least one resource is required for carrying out at least one function of the program module (201, 202, 203, 301, 302, 303, 401, 402, 403, 801, 802, 803, 804),
- **that** the control unit (25, 26) is capable of checking, if access rights are registered in the registry (25, 26) and
- **that** the control unit (25, 26) is capable of allowing an access of the program module to the resource, if the access right is registered the registry (25, 26).

11. Secure processor,
**characterized in,**
- **that** it contains a control unit, (25, 26) that is connected to a registry (15), which contains information about resources which are accessible to at least one program module (201, 202, 203, 301, 302, 303, 401, 402, 403, 801, 802, 803, 804); that the program module (201, 202, 203, 301, 302, 303, 401, 402, 403, 801, 802, 803, 804) has access to a data file (501, 502, 503, 601, 602, 603, 701, 702, 703),
- **that** the program module (201, 202, 203, 301, 302, 303, 401, 402, 403, 801, 802, 803, 804) is capable of evaluating, if a utilization of at least one resource is required for carrying out at least one function of the program module (201, 202, 203, 301, 302, 303, 401, 402, 403, 801, 802, 803, 804),
- **that** the control unit (25, 26) is capable of checking, if access rights are registered in the registry (25, 26) and
- **that** the control unit (25, 26) is capable of allowing an access of the program module to the resource, if the access right is registered the registry (25, 26).
